# EUROPÄISCHE PATENTSCHRIFT

(11) **EP 1 098 171 B1**
(45) Veröffentlichungstag und Bekanntmachung des Hinweises auf die Patenterteilung: **26.01.2011**
(21) Anmeldenummer: 00123634.8
(22) Anmeldetag: 30.10.2000
(51) Int. Cl.: G01C 21/36

(54) **Navigationssytem**
Navigation system
Système de navigation

(30) Priorität: 08.11.1999 DE 19953671
(43) Veröffentlichungstag der Anmeldung: 09.05.2001
(73) Patentinhaber: Continental Automotive GmbH, 30165 Hannover (DE)
(72) Erfinder: Ray, Olivier, 35578 Wetzlar (DE)

(56) Entgegenhaltungen:
- EP-A- 0 355 232
- EP-A- 0 697 580
- DE-A- 4 118 606
- FR-A- 2 743 176
- US-A- 5 908 464

## Beschreibung

Die Erfindung betrifft ein Navigationssystem für Kraftfahrzeuge mit Mitteln zur Bestimmung der Fahrzeugposition, einer Eingabeeinheit zur Eingabe eines Fahrziels, Mitteln zum Empfang von Verkehrsinformationen, einer Recheneinheit zur Datenaufbereitung, einer optischen Ausgabeeinheit zur graphischen Darstellung von Fahrhinweisen und die Fahrstrecke betreffenden Verkehrsinformationen, die die Länge einer Verkehrsbehinderung beinhalten. Weiterhin betrifft die Erfindung ein Verfahren zur Aufbereitung von Verkehrsinformationen in einem Navigationssystem für Kraftfahrzeuge.

Navigationssysteme finden in Kraftfahrzeugen eine zunehmende Verbreitung. Zumeist wird die Fahrzeugposition hierbei anhand einer Satellitennavigation bestimmt. Nach Eingabe eines Fahrziels wird anhand von Landkartendaten die Fahrroute zwischen dem gegenwärtigen Standort und dem Zielort berechnet. Die Landkartendaten können dabei im Fahrzeug vorhanden sein. In diesem Falle wird von einer sogenannten on-board Navigation gesprochen. Bei der sogenannten off-board Navigation sind die Landkartendaten in einem Zentralrechner außerhalb des Fahrzeuges abgelegt. Die gegenwärtige Fahrzeugposition und das Fahrziel wird über ein Mobilfunknetz an diesen Zentralrechner übermittelt, der eine Fahrroute berechnet und diese an das Fahrzeug überträgt.

In einer weiteren Variante werden Landkartendaten von einem Zentralrechner in das Fahrzeugnavigationssystem mittels Mobilfunk übertragen. Anschließend wird die Routenberechnung im Fahrzeug selbst vorgenommen. Darüber hinaus sind bereits Navigationssysteme bekannt, bei denen Verkehrsinformationen in die Routenberechnung einbezogen werden oder dem Benutzer auf einer optischen Ausgabeeinheit angezeigt werden. Bei diesen Verkehrsinformationen handelt es sich im wesentlichen um solche hinsichtlich von Baustellen oder Staus. Weitere Beispiele sind Meldungen über allgemeine Gefahren, Straßenglätte, Fahrbahnzustand, schlechte Sicht, Windverhältnisse, Unfälle, Geisterfahrer und dergleichen. Die Verkehrsinformationen können beispielsweise über ein Rundfunksystem oder ein Mobilfunksystem in das Fahrzeug übermittelt und an die Recheneinheit des Navigationssystems weitergeleitet werden. Informationen zu Verkehrsbehinderungen werden bei bekannten Navigationssystemen beispielsweise über ein Symbol in einer Landkartendarstellung angezeigt. Dabei sind Anfang und Ende sowie Länge der Verkehrsbehinderung nicht erkennbar.

Aus der US-A-5,908,464 und der DE 41 18 606 A1 ist es bekannt, in einer Kartendarstellung mit Anzeige der aktuellen Fahrzeugposition durch einen Pfeil bzw. durch eine Vielzahl von Pfeilen an einer Straße darauf hinzuweisen, daß in dieser Straße ein Verkehrsstau vorliegt. Bei einer Landkartendarstellung, die in der Regel ein größeres geographisches Gebiet umfaßt, ist die Entfernung bis zum Auftreten der Verkehrsbehinderung nicht ohne weiteres erkennbar.

Aus der EP-A-0 355 232 ist es bekannt, in einem balkenförmigen Diagramm den Abstand des Fahrzeugs zur nächsten Ausfahrt anzuzeigen.

Aufgabe der Erfindung ist es daher, ein Navigationssystem anzugeben, bei dem auf einfach erfaßbare Weise Informationen über die Länge einer Verkehrsbehinderung und den Abstand bis zu einem in diesem Zusammenhang markanten geographischen Punkt, wie zum Beispiel den Abstand bis zum Beginn oder Ende der Verkehrsbehinderung oder bis zu einer Abzweigstelle, dargestellt werden. Diese Darstellung soll insbesondere auch dann zur Verfügung stehen, wenn keine Kartenausgabe erfolgt, d. h. die Zielführung über symbolische Fahrhinweise erfolgt. Eine weitere Aufgabe der Erfindung ist es, ein Verfahren zur Aufbereitung von Verkehrsinformationen in einem Navigationssystem für Kraftfahrzeuge anzugeben.

Die erstgenannte Aufgabe wird bei einem gattungsgemäßen Navigationssystem dadurch gelöst, dass die Recheneinheit zur Berechnung eines Abstands des Fahrzeugs zu einem in Zusammenhang mit der Verkehrsbehinderung markanten Punkt ausgelegt ist und die Länge der Verkehrsbehinderung und der Abstand des Fahrzeugs zu dem in Zusammenhang mit der Verkehrsbehinderung markanten Punkt in einem balken-, ring- oder kreisförmigen Diagramm darstellbar sind. Bei dem Abstand kann es sich insbesondere um den Abstand bis zum Beginn der Verkehrsbehinderung oder auch bis zum Ende der Verkehrsbehinderung oder bis zu einer Abzweigstelle handeln. Eine solche Darstellungsweise von Verkehrsbehinderungen ist für den Benutzer auf einfache Weise erfaßbar. Das Diagramm wird mit der Fahrzeugbewegung und bei sich ändernden Informationen über die Länge der Verkehrsbehinderung regelmäßig aktualisiert, so daß der Fahrer auf optische Weise einen Eindruck davon bekommt wie schnell er sich einer bestehenden Verkehrsbehinderung nähert. Somit kann der Fahrer sich mit besonderer Vorsicht der Verkehrsbehinderung nähern.

Zum anderen ist für den Benutzer die Länge der Verkehrsbehinderung erkennbar, so daß der Benutzer schnell entscheiden kann, ob gegebenenfalls eine Ausweichroute eingeschlagen werden soll. Hierzu ist es besonders vorteilhaft, wenn das Diagramm einen Hinweis zu einer Abzweigstelle zum Verlassen der gegenwärtigen Fahrroute enthält. In der Regel wird dies die nächst mögliche Abzweigstelle oder eine besonders geeignete Abzweigstelle sein. Diese Abzweigstelle kann sowohl vor der Verkehrsbehinderung als auch innerhalb der Verkehrsbehinderung liegen. Die Position des Hinweises auf die Abzweigstelle wird vorzugsweise im richtigen Verhältnis zur Entferung der Abzweigstelle vom Beginn bzw. Ende der Verkehrsbehinderung und der Länge der Verkehrsbehinderung angeordnet. Somit kann der Fahrer auch auf einfache Weise erfassen, wie weit seine Strecke bis zu dieser Abzweigstelle noch ist und wie weit diese Abzweigstelle vom Anfang der Verkehrsbehinderung entfernt ist.

Besonders bevorzugt wird die Darstellung der Länge der Verkehrsbehinderung und des Abstandes des Fahrzeuges vom Beginn der Verkehrsbehinderung in einem balkenförmigen Diagramm. Diese Darstellung ist zum einen besonders einfach erfaßbar, zum anderen können Abzweigstellen besonders übersichtlich angeordnet werden. Die Fahrzeugposition, die Verkehrsbehinderung und die Abzweigstelle können dabei mit verschiedenen graphischen Symbolen ("lcons") symbolisiert werden.

Daneben sind jedoch weitere Diagrammdarstellungen möglich, wie beispielsweise die Darstellung als Ring- oder Kreisdiagramm. Die Diagrammdarstellung kann sowohl zwei- als auch dreidimensional erfolgen. Besonders bevorzugt werden Ausführungsformen, bei denen die Darstellung der noch zu fahrenden Strecke und des Bereichs mit den Verkehrsbehinderungen in unterschiedlichen Farben erfolgt. Anstelle einer unterschiedlichen Farbdarstellung ist jedoch auch die Darstellung in unterschiedlichen Graustufen möglich.

Die erfindungsgemäße Darstellung wird insbesondere dann mit Vorteil eingesetzt werden können, wenn die Fahrhinweise optisch rein symbolisch, insbesondere in Form von Pfeilen, angezeigt werden. Bei einer solchen Darstellung besteht nämlich ansonsten nur die Möglichkeit die Länge einer Verkehrsbehinderung und den Abstand bis zum Beginn der Verkehrsbehinderung durch Zahlenangaben zu verdeutlichen. Diese sind jedoch während der Fahrt vom Benutzer nur schwer aufzunehmen und zu verarbeiten.

In einer weiteren Ausführungsform ist vorgesehen, daß die Bildschirmdarstellung zwei verschiedene Bereiche aufweist. In einem ersten Anzeigebereich werden das Diagramm mit der Länge der Verkehrsbehinderung und dem Abstand des Fahrzeuges vom Beginn der Verkehrsbehinderung und die symbolischen Fahrhinweise dargestellt, während in einem zweiten Anzeigebereich eine Straßenkarte darstellbar ist. Durch die Darstellung der Straßenkarte erhält der Fahrer eine Übersichtsinformation hinsichtlich der vorhandenen Straßen in dem gerade befahrenen Gebiet. Durch die Darstellung der Fahrhinweise und des Diagramms in einem separaten Anzeigebereich kann die Straßenkarte insbesondere sehr übersichtlich gehalten werden, da die zuvor genannten Hinweise in ihr nicht mehr enthalten sein müssen.

Das erfindungsgemäße Navigationssystem kann sowohl als on-board als auch als off-board Navigationssystem aufgeführt sein. Insbesondere ist es vorgesehen, dass in der Recheneinheit eine Routenberechnung durchführbar ist. Die für die Routenberechnung erforderlichen Landkartendaten können dabei von einem im Fahrzeug vorhandenen Datenträger über ein Lesegerät, das mit der Recheneinheit verbunden ist, ausgelesen werden, wobei die auf dem Datenträger abgespeicherten Landkartendaten in einen Speicher der Recheinheit übertragen werden.

In einer alternativen Ausführungsform können die Landkartendaten aber auch von einem externen Zentralrechner in das Fahrzeug übertragen werden. Dies kann beispielsweise über ein Mobilfunksystem erfolgen.

In einer weiteren Ausgestaltung der Erfindung ist es vorgesehen, dass die Routenberechnung in einem externen Zentralrechner durchgeführt wird und die Fahrinformationen an das Fahrzeug übermittelt werden, wie dies von bekannten off-board Navigationssystem bekannt ist. Die beiden letztgenannten Ausführungsformen haben den Vorteil, daß im Zentralrechner stets aktualisierte Daten zur Verfügung stehen, während bei dem on-board System der Benutzer selbst für die Aktualisierung des Datenbestandes verantwortlich ist. Der Vorteil des on-board Systems liegt jedoch in der autonomen Zielführung, ohne dass auf externe Infrastruktur zurückgegriffen werden muß.

Die Übermittlung der Verkehrsinformationen kann in bereits bekannter Weise über ein Rundfunksystem oder über ein Mobilfunktelefon erfolgen.

Bei einem erfindungsgemäßen Verfahren zur Aufbereitung von Verkehrsinformationen in einem Navigationssystem für Kraftfahrzeuge wird eine Fahrroute anhand eines eingegebenen Fahrziels berechnet, die Fahrzeugposition bestimmt, Verkehrsinformationen zu Verkehrsbehinderungen, die auch deren Länge beinhalten, empfangen, die Verkehrsinformationen in einer Recheneinheit hinsichtlich ihrer Relevanz für die berechnete Fahrroute ausgewertet, der Abstand des Fahrzeuges von einer auf der Fahrroute des Fahrzeug liegenden Verkehrsbehinderung bestimmt und die Länge der Verkehrsbehinderung und der Abstand des Fahrzeugs vom Beginn der Verkehrsbehinderung in einem balken-, ring- oder kreisförmigen Diagramm auf einer optischen Ausgabeeinheit dargestellt.

Weitere vorteilhafte Ausgestaltungen des Verfahrens sind in den Unteransprüchen angegeben.

Die Erfindung wird nachfolgend anhand eines Ausführungsbeispiels und der Zeichnung näher beschrieben.

Es zeigen:
- Fig. 1:: die wesentlichen Komponenten eines on-board Navigationssystems,
- Fig. 2:: eine Bildschirmdarstellung,
- Fig. 3:: verschiedene Diagrammvarianten.

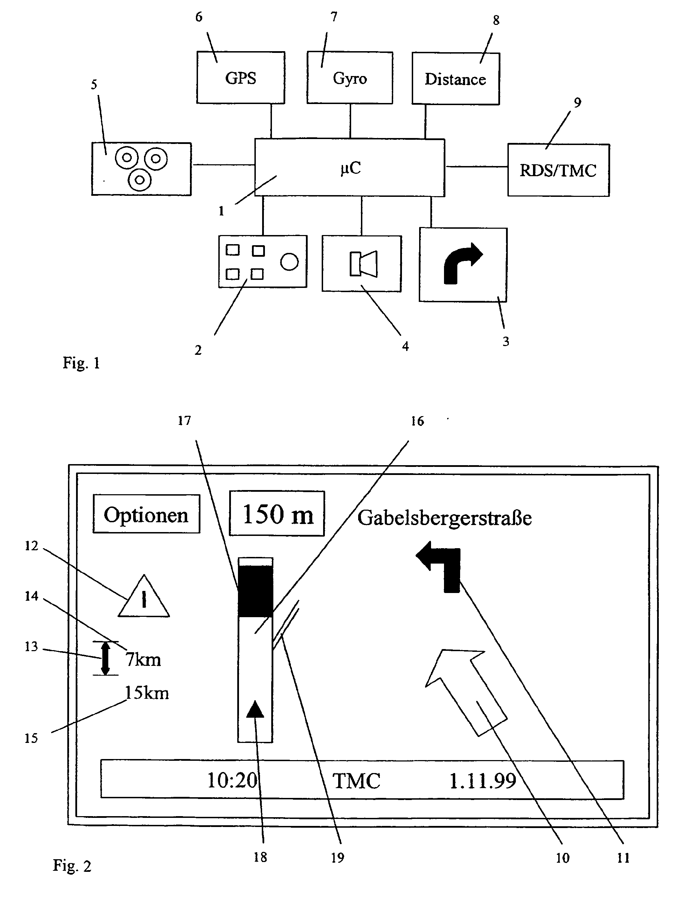

In Figur 1 sind die wesentlichen Komponenten eines on-board Navigationssystems dargestellt. Zentraler Bestandteil dieses Systems ist die Recheneinheit 1. Mit der Recheneinheit 1 ist eine Bedieneinheit 2 verbunden, über die ein Fahrziel eingegeben oder ausgewählt werden kann. Weiterhin können über die Bedieneinheit 2 weitere Einstellungen des Navigationssystems vorgenommen werden. Zur Ausgabe von Fahrhinweisen weist das System weiterhin als optische Ausgabeeinheit einen Bildschirm 3 auf, wobei auch eine Darstellung auf mehreren Bildschirmen möglich ist. Zusätzlich ist eine akustische Ausgabeeinheit 4 vorgesehen, über die Fahrhinweise akustisch ausgegeben werden können. Weiterhin ist mit der Recheneinheit 1 ein Lesegerät 5 verbunden, das zum Auslesen von Landkartendaten aus einem Speichermedium und zur Weiterleitung der Landkartendaten an einen Speicher der Recheneinheit 1 ausgelegt ist. Die Landkartendaten sind beispielsweise auf einer CD-ROM abgespeichert. Weiterhin ist mit der Recheneinheit 1 ein Empfänger für GPS-Signale vorhanden, so dass eine Positionsbestimmung anhand von Satellitenpositionsdaten durchgeführt werden kann. Zur Bestimmung der Fahrzeugposition über Koppelnavigation sind weiterhin ein Richtungssensor 7 und ein Wegstreckensensor 8 mit der Recheneinheit 1 verbunden. Zum Empfang von aktuellen Verkehrsinformationen ist ein Rundfunkempfänger 9 vorgesehen, der ebenfalls mit der Recheneinheit 1 verbunden ist. Somit können von dem Rundfunkempfänger 9 empfangene Verkehrsinformationen direkt bei der Routenberechnung berücksichtigt werden oder über den Bildschirm 3 oder die akustische Ausgabeeinheit 4 an den Fahrer übermittelt werden. Anstatt oder zusätzlich zu dem Rundfunkempfänger 9 können auch ein GSM-Modul oder ein Mobilfunktelefon zur Übertragung der Verkehrsinformationen in das Fahrzeug vorhanden sein. Insoweit handelt es sich um ein an sich bekanntes Navigationssystem, so dass eine weitergehende Beschreibung der Einzelkomponenten und deren Zusammenwirken hier nicht erforderlich ist.

Die von dem Rundfunkempfänger 9 empfangenen Verkehrsinformationen werden in der Recheneinheit 1 in ebenfalls an sich bekannter Weise ausgewertet. Liegen Verkehrsinformationen hinsichtlich der vorgesehenen Fahrroute vor, so wird nun von der Recheneinheit 1 erfindungsgsmäß der Abstand des Fahrzeuges zu dem Beginn der gemeldeten Verkehrsbehinderung berechnet. Hierzu wird die über GPS- bzw. Koppelnavigation ermittelte Fahrzeugposition berücksichtigt. Anschließend wird die Länge der gemeldeten Verkehrsbehinderung und der Abstand des Fahrzeuges vom Beginn der Verkehrsbehinderung von der Recheneinheit 1 zu einem Diagramm aufbereitet und auf dem Bildschirm 3 dargestellt. Vorzugsweise erfolgt auch ein akustischer Hinweis. Alternativ zu dem oben beschriebenen ist es auch möglich, Verkehrsinformationen in einem bestimmten Umkreis um die Fahrzeugposition oder auch für den Zielort zu selektieren und für die Darstellung zu einem geeigneten Zeitpunkt aufzubereiten.

In Figur 2 ist beispielhaft eine erfindungsgemäße Bildschirmdarstellung gezeigt. Zu den auf dem Bildschirm angezeigten Informationen gehören beispielsweise die Hinweise zur Fahrrichtung und zu bevorstehenden Abbiegemanövern über die Pfeildarstellungen 10, 11. Daneben befindet sich in der Bildschirmdarstellung ein allgemeines Symbol 12, das auf eine Verkehrsbehinderung auf der geplanten Route hinweist. Über ein Symbol 13 zusammen mit einer Längenangabe 14 wird die Länge der Verkehrsbehinderung dargestellt. Über die Abstandsangabe 15 wird der Benutzer weiterhin über den Abstand der gegenwärtigen Fahrzeugposition vom Beginn der Verkehrsbehinderung informiert. Es hat sich jedoch gezeigt, dass die reine Angabe von Zahlenwerten vom Fahrer während der Fahrt nur relativ schlecht aufzunehmen und zu verarbeiten ist. Erfindungsgemäß ist daher weiterhin die Darstellung dieser Informationen in einem - hier balkenförmigen - Diagramm 16 vorgesehen. Im dargestellten Beispiel weist das Diagramm 16 einen Bereich 17 auf, der die Verkehrsbehinderung repräsentiert. Die Balkenlänge des Bereichs 17 ist ein Maß für die Länge der gemeldeten Verkehrsbehinderung. Weiterhin ist in dem Diagramm 16 die gegenwärtige Fahrzeugposition über ein Symbol 18 dargestellt. Der Abstand des Symbols 18 von dem die Verkehrsbehinderung repräsentierenden Bereich 17 ist dabei ein Maß für den Abstand des Fahrzeuges vom Beginn der Verkehrsbehinderung.

Durch einen einzigen Blick auf die Bildschirmdarstellung kann der Fahrer beispielsweise zunächst anhand der Zahlenangabe 14 die Länge der Verkehrsbehinderung aufnehmen. Die Ausgabe kann jedoch auch akustisch erfolgen. Die Länge der Verkehrsbehinderung wird sich in der Regel nur langsam ändern. Durch die Relation des Abstandes des eigenen Fahrzeugs von der Verkehrsbehinderung zur Länge der Verkehrsbehinderung in der Diagrammdarstellung erhält der Fahrer zudem eine sehr schnelle und stets aktuelle Übersicht über den Abstand bis zum Beginn der Verkehrsbehinderung, ohne dass er hierzu weitere Zahlen verarbeiten muss.

Mit dem Diagramm 16 ist zusätzlich ein Symbol 19 für eine in diesem Fall vor der Verkehrsbehinderung von der geplante Route abweichende Abzweigung vorhanden. Diese Abzweigung ist ebenfalls wieder in Relation zur Länge der Verkehrsbehinderung und des gegenwärtigen Standortes des Fahrzeugs richtig positioniert, so dass der Fahrer auch einen schnellen Eindruck über die Entfernung bis zur Abzweigung bekommt.

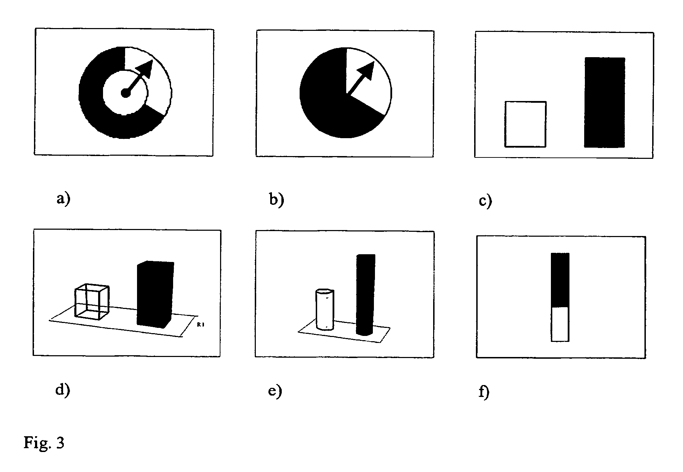

In Figur 3 sind beispielhaft verschiedene alternative Diagrammdarstellungen aufgezeigt, die erfindungsgemäß eingesetzt werden können. Dazu gehören die in Fig. 3a und 3b dargestellten Ring- und Kreisdiagramme, bei denen die Länge der Verkehrsbehinderung beispielsweise durch den dunklen Sektor und die Fahrzeugposition durch einen Zeiger dargestellt werden können. In Figur 3c ist ein Balkendiagramm mit nebeneinander angeordneten Balken dargestellt, wobei die Balkenhöhe die Länge der Verkehrsbehinderung bzw. den Abstand bis zum Beginn der Verkehrsbehinderung symbolisieren. In den Figuren 3d und 3e sind entsprechende dreidimensionale Darstellungen in Form von Quadern oder Zylindern gezeigt. Figur 3f zeigt eine Darstellung mit übereinander angeordneten Balken, wobei wiederum die Balkenhöhe die Länge der Verkehrsbehinderung bzw. den Abstand bis zum Beginn der Verkehrsbehinderung symbolisiert.

## Patentansprüche

1. Navigationssystem für Kraftfahrzeuge mit
- Mitteln zur Bestimmung der Fahrzeugposition (6; 7, 8),
- einer Eingabeeinheit (2) zur Eingabe eines Fahrziels,
- Mitteln zum Empfang von Verkehrsinformationen (9),
- einer Recheneinheit (1) zur Datenaufbereitung,
- einer optischen Ausgabeeinheit (3) zur graphischen Darstellung von Fahrhinweisen und die Fahrstrecke betreffende Verkehrsinformationen, die die Länge einer Verkehrsbehinderung beinhalten,
**dadurch gekennzeichnet, daß** die Recheneinheit (1) zur Berechnung eines Abstands des Fahrzeugs zu einem in Zusammenhang mit der Verkehrsbehinderung markanten Punkt ausgelegt ist und dass Mittel zur Darstellung der Länge der Verkehrsbehinderung und des Abstands des Fahrzeugs zu dem in Zusammenhang mit der Verkehrsbehinderung markanten Punkt in einem balken-, ringoder kreisförmigen Diagramm vorgesehen sind.

2. Navigationssystem nach einem der vorhergehenden Ansprüche, **dadurch gekennzeichnet, daß** das Diagramm einen Hinweis zu einer Abzweigstelle (19) enthält und die Position des Hinweises in Relation zur Entfernung der Abweigstelle vom Beginn bzw. Ende der Verkehrsbehinderung angeordnet ist.

3. Navigationssystem nach einem der vorhergehenden Ansprüche, **dadurch gekennzeichnet, daß** die Fahrhinweise symbolisch, insbesondere in Form von Pfeilen (10, 11), angezeigt werden.

4. Navigationssystem nach einem der vorhergehenden Ansprüche, **dadurch gekennzeichnet, daß** auf der Ausgabeeinheit in einem ersten Anzeigebereich das Diagramm und die symbolischen Fahrhinweise und in einem zweiten Anzeigebereich eine Straßenkarte dargestellt wird.

5. Navigationssystem nach einem der vorhergehenden Ansprüche, **dadurch gekennzeichnet, daß** in der Recheneinheit (1) eine Routenberechnung durchf geführt wird.

6. Navigationssystem nach einem der vorhergehenden Ansprüche, **dadurch gekennzeichnet, daß** ein Lesegerät (5) zum Auslesen von auf einem Datenträger abgespeicherten Landkartendaten vorhanden ist.

7. Navigationssystem nach einem der vorhergehenden Ansprüche, **dadurch gekennzeichnet, daß** das Navigationssystem zum Empfang von Landkartendaten ausgelegt ist, die von einer zentralen Sendestation ausgesendet werden.

8. Navigationssystem nach einem der vorhergehenden Ansprüche, **dadurch gekennzeichnet, daß** ein Rundfunkempfänger (9) zum Empfang der Verkehrsinformationen vorhanden ist und die Verkehrsinformationen in der Recheneinheit (1) ausgewertet werden.

9. Navigationssystem nach einem der vorhergehenden Ansprüche, **dadurch gekennzeichnet, daß** es mit einem Mobilfunktelefon verbunden ist, über das die Verkehrsinformationen empfangbar sind.

10. Navigationssystem nach Anspruch 9, **dadurch gekennzeichnet, daß** über das Mobilfunktelefon auch Landkartendaten empfangbar sind.

11. Navigationssystem nach einem der vorhergehenden Ansprüche, **dadurch gekennzeichnet, daß** über das Mobilfunktelefon eine von einem Zentralrechner berechnete Route empfangbar ist.

12. Navigationssystem nach einem der vorhergehenden Ansprüche, **dadurch gekennzeichnet, daß** es eine akustische Ausgabeeinheit (4) enthält.

13. Navigationssystem nach einem der vorhergehenden Ansprüche, **dadurch gekennzeichnet, daß** die Fahrzeugposition durch Koppelnavigation bestimmt wird.

14. Navigationssystem nach einem der vorhergehenden Ansprüche, **dadurch gekennzeichnet, daß** die Fahrzeugposition durch Satellitennavigation bestimmt wird.

15. Verfahren zur Aufbereitung von Verkehrsinformationen in einem Navigationssystem für Kraftfahrzeuge, wobei
- eine Fahrroute anhand eines eingegebenen Fahrziels berechnet wird
- die Fahrzeugposition bestimmt wird,
- Verkehrsinformationen zu Verkehrsbehinderungen, die auch deren Länge beinhalten, empfangen werden,
- die Verkehrsinformationen in einer Recheneinheit hinsichtlich ihrer Relevanz für die berechnete Fahrroute ausgewertet werden,
- der Abstand des Fahrzeugs von einer auf der Fahrroute des Fahrzeugs liegenden Verkehrsbehinderung bestimmt wird,
- die Länge der Verkehrsbehinderung und der Abstand des Fahrzeugs zu einem in Zusammenhang mit der Verkehrsbehinderung markanten Punkt, insbesondere zum Anfang der Verkehrsbehinderung, in einem balken-, ring- oder kreisförmigen Diagramm auf einer optischen Ausgabeeinheit dargestellt wird.

16. Verfahren nach Anspruch 14 oder 15, **dadurch gekennzeichnet, daß** die Entfernung einer Abzweigstelle vom Beginn oder Ende der Verkehrsbehinderung berechnet wird und das Diagramm einen Hinweis auf diese Abzweigstelle enthält, wobei die Position des Hinweises auf die Abzweigstelle in Relation zur Entfernung der Abzweigstelle vom Beginn oder Ende der Verkehrsbehinderung angeordnet ist.

17. Verfahren nach einem der vorhergehenden Ansprüche 14 bis 16, **dadurch gekennzeichnet, daß** auf der Ausgabeeinheit Fahrhinweise symbolisch, insbesondere in Form von Pfeilen, ausgegeben werden.

18. Verfahren nach einem der vorhergehenden Ansprüche 14 bis 17, **dadurch gekennzeichnet, daß** auf der Ausgabeeinheit in einem ersten Anzeigebereich das Diagramm und die symbolischen Fahrhinweise und in einem zweiten Ausgabebereich eine Straßenkarte dargestellt werden.

19. Verfahren nach einem der vorhergehenden Ansprüche 14 bis 18, **dadurch gekennzeichnet, daß** die Berechnung der Fahrroute in der Recheneinheit des Navigationssystems durchgeführt wird.

20. Verfahren nach Anspruch 19, **dadurch gekennzeichnet, daß** die zur Berechnung der Fahrroute erforderlichen Landkartendaten von einem im Fahrzeug vorhandenen Lesegerät an die Recheneinheit übermittelt werden.

21. Verfahren nach einem der vorhergehenden Ansprüche 14 bis 19, **dadurch gekennzeichnet, daß** die Landkartendaten von einem externen Sender in das Fahrzeug übermittelt werden.

22. Verfahren nach einem der vorhergehenden Ansprüche 14 bis 21, **dadurch gekennzeichnet, daß** die Verkehrsinformationen über ein Rundfunksystem übermittelt werden.

23. Verfahren nach einem der vorhergehenden Ansprüche 14 bis 22, **dadurch gekennzeichnet, daß** die Verkehrsinformationen über ein Mobilfunksystem übermittelt werden.

24. Verfahren nach einem der vorhergehenden Ansprüche 14 bis 23, **dadurch gekennzeichnet, daß** die Fahrroute in einem außerhalb des Fahrzeugs angeordneten Zentralrechner ermittelt und an das Navigationssystem übermittelt wird.

25. Verfahren nach einem der vorhergehenden Ansprüche 14 bis 24, **dadurch gekennzeichnet, daß** die Fahrzeugposition durch Koppelnavigation ermittelt wird.

26. Verfahren nach einem der vorhergehenden Ansprüche 14 bis 25, **dadurch gekennzeichnet, daß** die Fahrzeugposition durch Satellitennavigation ermittelt wird.

## Claims

1. Navigation system for motor vehicles having
- means for determining the vehicle position (6; 7, 8),
- an input unit (2) for the input of a destination,
- means for receiving traffic information (9),
- a computation unit (1) for data conditioning,
- a visual output unit (3) for graphically presenting driving advice and traffic information which relates to the route and which contains the length of a traffic obstruction,
**characterized in that** the computation unit (1) is designed to calculate a distance between the vehicle and a point which is remarkable in connection with the traffic obstruction and **in that** means for presenting the length of the traffic obstruction and the distance between the vehicle and the point which is remarkable in connection with the traffic obstruction in a bar, doughnut or pie chart are provided.

2. Navigation system according to the preceding claim, **characterized in that** the chart contains a reference to a branch-off point (19), and the position of the reference is arranged in relation to the distance of the branch-off point from the start or end of the traffic obstacle.

3. Navigation system according to one of the preceding claims, **characterized in that** the driving advice is displayed symbolically, particularly in the form of arrows (10, 11).

4. Navigation system according to one of the preceding claims, **characterized in that** the output unit presents the chart and the symbolic driving advice in a first display area and a road map in a second display area.

5. Navigation system according to one of the preceding claims, **characterized in that** the computation unit (1) performs route calculation.

6. Navigation system according to one of the preceding claims, **characterized in that** a reader (5) is provided for the purpose of reading map data stored on a data storage medium.

7. Navigation system according to one of the preceding claims, **characterized in that** the navigation system is designed to receive map data which are transmitted by a central transmission station.

8. Navigation system according to one of the preceding claims, **characterized in that** a broadcast radio receiver (9) is provided for the purpose of receiving the traffic information, and the traffic information is evaluated in the computation unit (1) .

9. Navigation system according to one of the preceding claims, **characterized in that** it is connected to a mobile radio telephone which can be used to receive the traffic information.

10. Navigation system according to Claim 9, **characterized in that** the mobile radio telephone can also be used to receive map data.

11. Navigation system according to one of the preceding claims, **characterized in that** the mobile radio telephone can be used to receive a route calculated by a central computer.

12. Navigation system according to one of the preceding claims, **characterized in that** it contains an audio output unit (4).

13. Navigation system according to one of the preceding claims, **characterized in that** the vehicle position is determined by means of compound navigation.

14. Navigation system according to one of the preceding claims, **characterized in that** the vehicle position is determined by means of satellite navigation.

15. Method for conditioning traffic information in a navigation system for motor vehicles, wherein
- a route is calculated using an input destination,
- the vehicle position is determined,
- traffic information relating to traffic obstacles, which also includes the length thereof, is received,
- the traffic information is evaluated in a computation unit in terms of the relevance of said information to the calculated route,
- the distance between the vehicle and a traffic obstacle situated on the route of the vehicle is determined,
- the length of the traffic obstacle and the distance between the vehicle and a point which is remarkable in connection with the traffic obstacle, particularly the start of the traffic obstacle, are presented on a visual output unit in a bar, doughnut or pie chart.

16. Method according to Claim 14 or 15, **characterized in that** the distance between a branch-off point and the start or end of the traffic obstacle is calculated and the chart contains a reference to said branch-off point, the position of said reference to the branch-off point being arranged in relation to the distance between the branch-off point and the start or end of the traffic obstacle.

17. Method according to one of the preceding Claims 14 to 16, **characterized in that** the output unit outputs driving advice symbolically, particularly in the form of arrows.

18. Method according to one of the preceding Claims 14 to 17, **characterized in that** the output unit presents the chart and the symbolic driving advice in a first display area and a road map in a second output area.

19. Method according to one of the preceding Claims 14 to 18, **characterized in that** the route is calculated in the computation unit of the navigation system.

20. Method according to Claim 19, **characterized in that** the map data required for calculating the route are transmitted to the computation unit by a reader which is present in the vehicle.

21. Method according to one of the preceding Claims 14 to 19, **characterized in that** the map data are transmitted to the vehicle by an external transmitter.

22. Method according to one of the preceding Claims 14 to 21, **characterized in that** the traffic information is transmitted by means of a broadcast radio system.

23. Method according to one of the preceding Claims 14 to 22, **characterized in that** the traffic information is transmitted by means of a mobile radio system.

24. Method according to one of the preceding Claims 14 to 23, **characterized in that** the route is ascertained in a central computer arranged outside the vehicle and is transmitted to the navigation system.

25. Method according to one of the preceding Claims 14 to 24, **characterized in that** the vehicle position is ascertained by means of compound navigation.

26. Method according to one of the preceding Claims 14 to 25, **characterized in that** the vehicle position is ascertained by means of satellite navigation.

## Revendications

1. Système de navigation pour véhicules automobiles comportant
- des moyens permettant de déterminer la position du véhicule automobile (6, 7, 8),
- une unité de saisie (2) destinée à saisir une destination,
- des moyens permettant de recevoir des informations concernant le trafic routier (9),
- une unité informatique (1) destinée au traitement des données,
- une unité optique de sortie (3) permettant de représenter graphiquement des indications concernant la conduite et des informations concernant le trafic routier relatives à l'itinéraire parcouru et comprenant la longueur d'une entrave à la circulation,
**caractérisé par le fait que** l'unité informatique (1) est dimensionnée pour le calcul de la distance séparant le véhicule d'un point significatif en relation avec l'entrave à la circulation et qu'il est prévu des moyens pour représenter, sur un diagramme en forme de barres, d'anneaux ou de cercles, la longueur de l'entrave à la circulation et la distance séparant le véhicule du point significatif en relation avec l'entrave à la circulation.

2. Système de navigation selon l'une des revendications précédentes, **caractérisé par le fait que** le diagramme renferme une indication relative à un point de déviation et que la position de l'indication est en relation avec la distance entre le point de déviation et le début ou, respectivement, la fin de l'entrave à la circulation.

3. Système de navigation selon l'une des revendications précédentes, **caractérisé par le fait que** les indications concernant la conduite peuvent être affichées symboliquement, notamment sous forme de flèches (10, 11).

4. Système de navigation selon l'une des revendications précédentes, **caractérisé par le fait que**, sur l'unité de sortie, le diagramme et les indications symboliques concernant la conduite sont représentés dans une première zone d'affichage et une carte routière est représentée dans une deuxième zone d'affichage.

5. Système de navigation selon l'une des revendications précédentes, **caractérisé par le fait qu'**un calcul d'itinéraire est effectué dans l'unité informatique (1).

6. Système de navigation selon l'une des revendications précédentes, **caractérisé par le fait qu'**il existe un lecteur (5) permettant de lire des données de carte routière mémorisées sur un support de données.

7. Système de navigation selon l'une des revendications précédentes, **caractérisé par le fait que** le système de navigation est conçu pour la réception de données de carte routière qui sont émises par une station émettrice centralisée.

8. Système de navigation selon l'une des revendications précédentes, **caractérisé par le fait qu'**il existe un récepteur de radiodiffusion (9) permettant de recevoir des informations relatives à la circulation routière et que ces informations sont analysées dans l'unité informatique (1).

9. Système de navigation selon l'une des revendications précédentes, **caractérisé par le fait qu'**il est relié à un appareil de téléphonie mobile grâce auquel les informations relatives à la circulation routière peuvent être captées.

10. Système de navigation selon la revendication 9, **caractérisé par le fait qu'**il est également possible, grâce à l'appareil de téléphonie mobile, de capter des données de carte routière.

11. Système de navigation selon l'une des revendications précédentes, **caractérisé par le fait qu'**il est possible, grâce à l'appareil de téléphonie mobile, de recevoir un itinéraire calculé par un ordinateur centralisé.

12. Système de navigation selon l'une des revendications précédentes, **caractérisé par le fait qu'**il comprend une unité acoustique de sortie (4).

13. Système de navigation selon l'une des revendications précédentes, **caractérisé par le fait que** la position du véhicule est déterminée par navigation à l'estime.

14. Système de navigation selon l'une des revendications précédentes, **caractérisé par le fait que** la position du véhicule est déterminée par navigation satellitaire.

15. Procédé pour le traitement d'informations relatives à la circulation routière dans un système de navigation pour véhicules automobiles, au cours duquel
- on calcule un itinéraire à l'aide d'une destination qui a été saisie,
- on détermine la position du véhicule,
- on reçoit des informations de circulation routière relatives à des entraves à la circulation qui comprennent également la longueur de ces entraves,
- on analyse, dans une unité informatique, les informations relatives à la circulation routière en ce qui concerne leur importance pour l'itinéraire calculé,
- on détermine la distance séparant le véhicule d'une entrave à la circulation se trouvant sur l'itinéraire du véhicule,
- on représente, sur une unité optique de sortie et sous forme de diagramme en forme de barres, d'anneaux ou de cercles, la longueur de l'entrave à la circulation et la distance séparant le véhicule d'un point significatif en relation avec l'entrave à la circulation, notamment du début de l'entrave à la circulation.

16. Procédé selon la revendication 14 ou 15, **caractérisé par le fait que** la distance entre un point de déviation et le début ou la fin de l'entrave à la circulation est calculée et que le diagramme renferme une indication relative à ce point de déviation, la position de l'indication étant en relation avec la distance entre le point de déviation et le début ou la fin de l'entrave à la circulation.

17. Procédé selon l'une des revendications précédentes 14 à 16, **caractérisé par le fait que**, sur l'unité de sortie, des indications de conduite sont éditées symboliquement, notamment sous forme de flèches.

18. Procédé selon l'une des revendications précédentes 14 à 17, **caractérisé par le fait que**, sur l'unité de sortie, le diagramme et les indications symboliques concernant la conduite sont représentés dans une première zone d'affichage et une carte routière est représentée dans une deuxième zone d'affichage.

19. Procédé selon l'une des revendications précédentes 14 à 18, **caractérisé par le fait que** le calcul de l'itinéraire est effectué dans l'unité informatique du système de navigation.

20. Système de navigation selon la revendication 19, **caractérisé par le fait que** les données de carte routière nécessaires au calcul de l'itinéraire sont transmises à l'unité informatique par un lecteur qui se trouve dans le véhicule.

21. Procédé selon l'une des revendications précédentes 14 à 19, **caractérisé par le fait que** les données de carte routière sont transmises dans le véhicule par un émetteur externe.

22. Procédé selon l'une des revendications précédentes 14 à 21, **caractérisé par le fait que** les informations relatives à la circulation routière sont transmises par l'intermédiaire d'un système de radiodiffusion.

23. Procédé selon l'une des revendications précédentes 14 à 22, **caractérisé par le fait que** les informations relatives à la circulation routière sont transmises par l'intermédiaire d'un système de téléphonie mobile.

24. Procédé selon l'une des revendications précédentes 14 à 23, **caractérisé par le fait que** l'itinéraire est déterminé dans un ordinateur centralisé se trouvant à l'extérieur du véhicule et est transmis au système de navigation.

25. Procédé selon l'une des revendications précédentes 14 à 24, **caractérisé par le fait que** la position du véhicule est déterminée par navigation à l'estime.

26. Procédé selon l'une des revendications précédentes 14 à 25, **caractérisé par le fait que** la position du véhicule est déterminée par navigation satellitaire.
